# EUROPÄISCHE PATENTSCHRIFT

(11) **EP 3 773 324 B1**
(45) Veröffentlichungstag und Bekanntmachung des Hinweises auf die Patenterteilung: **03.05.2023**
(21) Anmeldenummer: 20711053.7
(22) Anmeldetag: 27.02.2020
(51) Int. Cl.: A61C 8/00

(54) **SUPRAKONSTRUKTION, ZAHNIMPLANTAT UND ZAHNPROTHESE**
SUPERSTRUCTURE, DENTAL IMPLANT AND DENTAL PROSTHESIS
SUPERSTRUCTURE, IMPLANT DENTAIRE ET PROTHÈSE DENTAIRE

(30) Priorität: 06.05.2019 DE 102019111699
(43) Veröffentlichungstag der Anmeldung: 17.02.2021
(73) Patentinhaber: TRI Dental Implants Int. AG, 6331 Hünenberg (CH)
(72) Erfinder: VENANZONI, Sandro, 8051 Zuerich (CH); PEREZ, Rafael, 79106 Freiburg (DE); KAST, Holger, 6331 Hünenberg (CH); JUNG, Ronald, 8704 Herrliberg (CH)
(74) Vertreter: Witte, Weller & Partner Patentanwälte mbB
(86) Internationale Anmeldenummer: PCT/EP2020/055171
(87) Internationale Veröffentlichungsnummer: WO 2020/224822

(56) Entgegenhaltungen:
- EP-A1- 2 444 025
- EP-B1- 2 806 819
- WO-A1-2013/110714
- WO-A1-2020/043347
- DE-A1-102009 057 754

## Beschreibung

Die vorliegende Erfindung betrifft eine Suprakonstruktion sowie ein Zahnimplantat zur Verwendung in einer Zahnprothese. Des Weiteren betrifft die vorliegende Erfindung eine Zahnprothese, welche die erfindungsgemäße Suprakonstruktion und/oder das erfindungsgemäße Zahnimplantat aufweist.

Eine Suprakonstruktion, die die Grundlage für die Formulierung des Oberbegriffs des Anspruch 1 bildet, und ein Zahnimplantat, das die Grundlage für die Formulierung des Oberbegriffs des Anspruch 10 bildet, sind aus der EP 2 444 025 A1 bekannt. Weitere beispielhafte Suprakonstruktionen und Zahnimplantate sind aus der DE 10 2009 057 754 A1 und der WO 2013/110714 A1 bekannt.

Unter dem Begriff "Suprakonstruktion" wird ein auf einem Zahnimplantat befestigter Zahnersatz verstanden. Hierbei kann es sich beispielsweise um eine künstliche Zahnkrone (auch "Implantatkrone" genannt), eine Brücke oder ein sonstiges prothetisches bzw. künstliches Zahngebilde handeln.

Der Begriff "Zahnimplantat" wird umgangssprachlich häufig uneinheitlich und oft fälschlicherweise für das Gesamtgebilde einer Zahnprothese verwendet. Daher sei an dieser Stelle klargestellt, dass unter einem "Zahnimplantat" im medizinischen und vorliegenden Sinne nur der Implantatkörper verstanden wird, also die künstliche Zahnwurzel, die im Kiefer des Patienten implantiert wird. Häufig wird anstelle des Begriffs "Zahnimplantat" daher auch der Begriff "Implantatkörper" verwendet. Im Weiteren wird jedoch einheitlich der Begriff "Zahnimplantat" für den genannten Teil der Zahnprothese verwendet.

Herkömmliche Zahnprothesen weisen zusätzlich zu dem Zahnimplantat und der Suprakonstruktion ein sogenanntes Abutment auf, welches als Verbindungsteil zwischen dem Zahnimplantat und der Suprakonstruktion fungiert. Das Abutment bildet den sensiblen Übergang durch das periimplantäre Weichgewebe zur Mundhöhle und zur Suprakonstruktion. Derartige Abutments werden teilweise auch als "Stützpfeiler" oder als "Implantatpfosten" bezeichnet. Üblicherweise sind Abutments aus Titan, Keramik oder Keramikverbundstoffen wie Aluminiumoxid- oder Zirkondioxidkeramik.

Die Suprakonstruktion, also beispielsweise die künstliche Zahnkrone, ist typischerweise aus Keramik oder einem vergleichbaren Werkstoff. Traditionell wird die Suprakonstruktion von einem Zahntechniker wie folgt hergestellt: Zunächst wird ein Wachsmodell für die künstliche Zahnkrone erzeugt. Dann wird anhand des Wachsmodells die künstliche Zahnkrone gegossen. Das Abutment wird manuell auf die richtige Größe und Form abgeschliffen, um im letzten Schritt die gegossene, künstliche Zahnkrone auf das Abutment zu montieren. Meist erfolgt die Montage durch Verkleben der Suprakonstruktion mit dem Abutment. Durch diesen größtenteils manuell durchgeführten Prozess lassen sich hochpräzise Ergebnisse erzielen. Es versteht sich jedoch, dass das zeitaufwändig und damit auch kostenintensiv ist. Zudem ergibt sich eine Klebefuge zwischen der Suprakonstruktion und dem Abutment, welche anfällig für Undichtigkeiten ist und zudem die Langlebigkeit der Zahnprothese einschränken kann.

Heutzutage gibt es vielerlei Bestrebungen, den o.g. Prozess weitest möglich zu digitalisieren bzw. zu automatisieren. Die Suprakonstruktion wird mittlerweile häufig anhand eines 3D-Modells auf einer Fräsmaschine gefräst. Bei dieser Art der Herstellung wird direkt die Anschlussgeometrie für den Anschluss bzw. die Verbindung mit dem Abutment in die Suprakonstruktion auf deren Hinterseite eingebracht. Die Form und Größe des Abutments muss daher bereits bei der Herstellung der künstlichen Zahnkrone bekannt sein, um die Fräsmaschine entsprechend programmieren zu können. Dies wird meist anhand eines CAD-Modells des Abutments gemacht, welches in die Steuerung der Fräsmaschine eingelesen wird.

Da die Form und Größe des Abutments bereits vor der Herstellung der Suprakonstruktion bekannt sein muss, wählen viele Hersteller ein kurzes und kleines Abutment, das für jede Anatomie passt. Bei länglichen, also vergleichsweise langen Suprakonstruktionen ist ein kurzes und kleines Abutment im Verhältnis zu der Suprakonstruktion allerdings biomechanisch unpassend, so dass es zu Lockerungen oder Brüchen kommen kann.

Andere Hersteller lösen dies durch viele unterschiedliche Abutments. Je nach Form und Größe der Suprakonstruktion werden dann unterschiedlich große bzw. unterschiedlich geformte Abutments verwendet. So muss für einen künstlichen Schneidezahn beispielsweise ein anderes Abutment verwendet werden als für einen künstlichen Backenzahn. Ist bei der Verwendung für einen künstlichen Schneidezahn beispielsweise die hintere Flanke des Abutments nicht abgeschrägt, so wäre das Abutment auf der Hinterseite der Suprakonstruktion sichtbar, was schon aus rein ästhetischen Gesichtspunkten unerwünscht ist. Dieses Problem ergibt sich bei der Verwendung für einen künstlichen Backenzahn dagegen möglicherweise nicht.

Bei der automatisierten Herstellung mit digitalen CAD-Modellen werden für den Hersteller der Suprakonstruktion üblicherweise mehrere CAD-Datensätze bereitgestellt, welche die unterschiedlichen Formen der Abutments abbilden. Gleichzeitig muss der Hersteller der Suprakonstruktion eine Vielzahl von Abutments unterschiedlicher Formen und Größen auf Lager halten. Dies gestaltet sich vielfach als umständlich und erzeugt darüber hinaus hohe Lagerkosten.

Die Nachteile der bisherigen Herangehensweisen lassen sich also wie folgt zusammenfassen: Zum einen schränkt die Verwendung von Abutments die Form- und Gestaltungsfreiheit der Suprakonstruktion inklusive deren transgingivalen Anteils ein. Ein nicht flexibler transgingivaler Anteil der Suprakonstruktion kann vor allem Probleme beim Weichgewebsmanagement hervorrufen. Ein ideales Weichgewebsmanagement ist allerdings entscheidend für ein ästhetisches Ergebnis und ein langfristig stabiles Knochenniveau. Zum anderen sind die Material- und Herstellungskosten für eine solche Zahnprothese gemäß dem Stand der Technik relativ hoch. Darüber hinaus ergibt sich eine in vielerlei Hinsicht nachteilhafte Klebefuge zwischen der Suprakonstruktion und dem Abutment.

Vor diesem Hintergrund wäre es daher wünschenswert, einen völlig neuen Ansatz zu wählen, bei dem eine Zahnprothese der o.g. Art auch ohne Abutment auskommt, wobei also die Suprakonstruktion direkt mit dem Zahnimplantat zum Beispiel durch Verschrauben verbunden wird. Bei einem solchen Ansatz stellen sich jedoch besondere Anforderungen an das technische Design der Suprakonstruktion und des Zahnimplantats.

Es ist daher eine Aufgabe der vorliegenden Erfindung, eine Suprakonstruktion und ein Zahnimplantat bereitzustellen, die sich ohne die Verwendung eines Abutments unmittelbar und direkt miteinander verbinden lassen.

Diese Aufgabe wird gemäß einem ersten Aspekt der Erfindung durch eine Suprakonstruktion gemäß Anspruch 1 gelöst, die eine sich entlang einer Längsachse der Suprakonstruktion erstreckende Öffnung und eine Schnittstelle zur Befestigung der Suprakonstruktion an einem Zahnimplantat aufweist. Die Schnittstelle ist als Fortsatz ausgestaltet, der an einer Unterseite der Suprakonstruktion angeordnet ist, die Öffnung umgibt und eine zylindrische oder konische Mantelfläche hat, die eine Außenseite des Fortsatzes bildet. Die Mantelfläche ist durch eine Aussparung unterbrochen, die in die Öffnung mündet und als Gegenstück zu einem an dem Zahnimplantat angeordneten Verdrehsicherungselement dient. Die Aussparung weist zwei parallel zueinander verlaufende, planare, einander gegenüberliegende Mitnehmerflächen und eine konkave Anlagefläche auf, an welche die planaren Mitnehmerflächen jeweils angrenzen.

Die an der Unterseite der erfindungsgemäßen Suprakonstruktion angeordnete Schnittstelle ermöglicht eine Befestigung der Suprakonstruktion unmittelbar und direkt an dem Zahnimplantat, ohne die Verwendung eines Abutments. Aufgrund der speziellen Ausgestaltung der Schnittstelle lässt sich die Suprakonstruktion eindeutig definiert an dem Zahnimplantat anordnen. Dies ermöglicht eine eindeutig definierte Relativposition zwischen Suprakonstruktion und Zahnimplantat.

Ein Merkmal dieser Schnittstelle ist deren Ausbildung als Fortsatz, der nach unten hin von der Suprakonstruktion, also dem künstlichen Zahngebilde, absteht. Dieser Fortsatz lässt sich in eine dafür vorgesehene Öffnung im Zahnimplantat, die als Gegenstück an die Form des Fortsatzes angepasst ist, einführen. Der Fortsatz hat eine zylindrische oder konische Mantelfläche, die die Öffnung, welche sich entlang der Längsachse der Suprakonstruktion durch diese hindurch erstreckt, umgibt. Der Fortsatz erstreckt sich also um diese Öffnung herum und verläuft vorzugsweise ebenfalls entlang der Längsachse der Suprakonstruktion. Die zylindrische oder konische Mantelfläche bildet eine Außenseite des Fortsatzes, die einerseits den Fortsatz in Umfangsrichtung umgibt und sich andererseits parallel zu der Längsachse (im Fall einer zylindrischen Mantelfläche) oder unter einem spitzen Winkel relativ zu der Längsachse (im Falle einer konischen Mantelfläche) erstreckt.

In den Fortsatz ist seitlich eine Aussparung eingebracht, die die zylindrische oder konische Mantelfläche unterbricht und in die zentrale Öffnung der Suprakonstruktion mündet. Die Aussparung verläuft also durch einen Teil der seitlichen Wand des Fortsatzes hindurch, so dass an einer Stelle die seitliche Wand des Fortsatzes durch die Aussparung unterbrochen ist. Damit existiert vorzugsweise ein Loch in der seitlichen Wand des Fortsatzes, das sich von außen bis hin zu der zentralen Öffnung erstreckt.

Diese Aussparung dient als Verdrehsicherung, die ein Verdrehen um die Längsachse der Suprakonstruktion relativ zu dem Zahnimplantat verhindert. In diese Aussparung kann ein an die Form der Aussparung angepasstes Verdrehsicherungselement eingreifen, das an dem Zahnimplantat angeordnet ist.

Die zylindrische oder konische Mantelfläche des Fortsatzes dient als radiale Anlagefläche der Suprakonstruktion an dem Zahnimplantat, die Kräfte in radialer Richtung aufnimmt. Im Falle einer konischen Mantelfläche kann diese auch als axiale Anlage dienen, die Kräfte parallel zu der Längsachse der Suprakonstruktion aufnimmt.

Ein wesentlicher Vorteil der beschriebenen Form, der an der Suprakonstruktion angeordneten Schnittstelle besteht darin, dass diese nicht nur eine unmittelbare Verbindung der Suprakonstruktion mit dem Zahnimplantat ermöglicht, die eine hohe Kraftaufnahme gewährleistet und damit aus mechanischer Sicht extrem stabil ist und ein Verdrehen der Suprakonstruktion um die Längsachse relativ zu dem Zahnimplantat verhindert, sondern auch darin, dass sich diese Schnittstelle relativ einfach und damit kostengünstig mithilfe einer Fräsmaschine produzieren lässt. Die zylindrische oder konische Mantelfläche des Fortsatzes lässt sich ohne weiteres mithilfe eines Kugelfräsers, der typischerweise für die Herstellung der Suprakonstruktion verwendet wird, herstellen. Die Einbringung der Aussparung in die Mantelfläche hinein ist ebenfalls kein Problem. Auch diese lässt sich mithilfe eines Kugelfräsers ohne weiteres in den Fortsatz einbringen. Die Schnittstelle kann daher in wenigen Schritten mit den Werkzeugen, die typischerweise für die Herstellung der Suprakonstruktion verwendet werden, automatisiert hergestellt werden.

Gemäß einer bevorzugten Ausgestaltung ist die Aussparung im Bereich eines unteren freien Endes des Fortsatzes angeordnet und nach unten zu dem freien Ende hin offen. Bei der Aussparung handelt es sich also vorzugsweise nicht um ein geschlossenes Loch bzw. um eine geschlossene Bohrung, sondern um eine einseitig nach unten hin geöffnete Aussparung. Die Aussparung lässt sich daher grundsätzlich auch als nutförmige Aussparung beschreiben.

Die Öffnung der Aussparung nach unten hin hat den Vorteil, dass sich diese beim Montieren der Suprakonstruktion an dem Zahnimplantat ohne weiteres auf das an dem Zahnimplantat angeordnete Verdrehsicherungselement aufsetzen lässt. Die Montage der Suprakonstruktion an dem Zahnimplantat ist somit denkbar einfach.

Gemäß einer weiteren Ausgestaltung ist die Aussparung als tunnelartige Aussparung ausgestaltet. Sie hat also mit anderen Worten eine Querschnittsform, die der Querschnittsform eines Tunnels gleicht, allerdings ohne Bodenfläche, da die Aussparung, wie bereits erwähnt, vorzugsweise nach unten hin offen ist.

Erfidungsgemäß weist die Aussparung zwei parallel zueinander verlaufende, planare Mitnehmerflächen auf. Diese planaren Mitnehmerflächen liegen an äquivalent dazu geformten, planaren, parallelen Mitnehmerflächen an, die an dem Verdrehsicherungselement des Zahnimplantats angeordnet sind. Sie dienen der Kraftaufnahme in Umfangsrichtung und verhindern ein Verdrehen bzw. eine Torsion der Suprakonstruktion um die Längsachse relativ zu dem Zahnimplantat.

Vorzugsweise verlaufen die beiden planaren Mitnehmerflächen jeweils parallel zu einer Radialrichtung, die orthogonal zu der Längsachse ausgerichtet ist. Eine derartige Ausrichtung ermöglicht eine große Kraftübertragung der in Umfangsrichtung zwischen Suprakonstruktion und Zahnimplantat wirkenden Kräfte. Aufgrund der genannten Ausrichtung lassen sich die Mitnehmerflächen auch sehr einfach durch eine Fräsbearbeitung herstellen.

Erfindungsgemäß weist die Aussparung ferner eine konkave Anlagefläche auf. Auch diese konkave Anlagefläche verläuft vorzugsweise parallel zu einer Radialrichtung, die orthogonal zu der Längsachse ausgerichtet ist.

Die konkave Anlagefläche der Aussparung liegt auf einer als Gegenstück dazu geformten konkaven Anlagefläche, die am Verdrehsicherungselement des Zahnimplantats vorgesehen ist, an. Sie dient im Wesentlichen der Kraftübertragung in Axialrichtung, also parallel zu der Längsachse.

Besonders bevorzugt handelt es sich bei der in der Aussparung vorgesehenen, konkaven Anlagefläche um eine zylindrische Fläche, die im Querschnitt betrachtet halbkreisförmig ist. Auch dies dient wiederum einerseits der einfachen Herstellbarkeit und verbessert andererseits die mechanische Stabilität der Verbindungsstelle zwischen der an der Suprakonstruktion angeordneten Aussparung und dem an dem Zahnimplantat angeordneten Verdrehsicherungselement.

Erfindungsgemäß grenzen die planaren Mitnehmerflächen jeweils an die konkave Anlagefläche an und liegen einander gegenüber. Die beiden planaren Mitnehmerflächen grenzen also an einander gegenüberliegenden Seiten an die konkave Anlagefläche an. Dabei grenzt vorzugsweise jeweils eine erste Seitenkante der planaren Mitnehmerflächen jeweils an die konkave Anlagefläche an, wohingegen eine zweite, gegenüberliegende Seitenflanke der planaren Mitnehmerflächen jeweils an das freie, untere Ende des Fortsatzes angrenzt.

Gemäß einer weiteren Ausgestaltung verläuft die Öffnung zentrisch durch den Fortsatz hindurch. Die Mantelfläche des Fortsatzes ist daher, abgesehen von der Aussparung, vorzugsweise symmetrisch zu der Längsachse.

Weiterhin ist es bevorzugt, dass der Fortsatz spiegelsymmetrisch zu einer Längsschnittebene ist, in der die Längsachse liegt und die die Aussparung in zwei gleich große Hälften teilt. Die Aussparung samt ihrer konkaven Anlagefläche und den beiden planaren Mitnehmerflächen ist daher ebenfalls vorzugsweise spiegelsymmetrisch zu der genannten Längsschnittebene.

Gemäß einer weiteren Ausgestaltung weist der Fortsatz an seinem unteren, freien Ende bzw. an seinem stirnseitigen Ende eine kreisringförmige Auflagefläche auf, die durch die Aussparung unterbrochen ist und quer, vorzugsweise orthogonal, zu der Längsachse ausgerichtet ist.

Die kreisringförmige Auflagefläche muss nicht zwangsläufig orthogonal zu der Längsachse ausgerichtet sein, sie kann auch quer dazu verlaufen. Unter "quer" wird vorliegend jede Art der Ausrichtung verstanden, welche nicht parallel ist. Vorzugsweise hat die kreisringförmige Auflagefläche rund herum einen konstanten Winkel in Bezug auf die Längsachse der Suprakonstruktion. Besonders bevorzugt ist dieser Winkel größer als 60°.

Die kreisringförmige Auflagefläche dient insbesondere in dem Fall einer zylindrischen Ausgestaltung der Mantelfläche des Fortsatzes als axiale Auflagefläche, die einer Kraftübertragung zwischen Suprakonstruktion und Zahnimplantat parallel zur Längsachse ermöglicht. Im Falle einer konischen Ausgestaltung der Mantelfläche des Fortsatzes können die Axialkräfte, wie oben bereits erwähnt, jedoch auch über die Mantelfläche übertragen werden, so dass die Suprakonstruktion nicht zwangsläufig mit der genannten kreisringförmigen Auflagefläche auf einer entsprechenden Gegenfläche am Zahnimplantat aufliegen muss.

Gemäß einer weiteren Ausgestaltung weist die Suprakonstruktion einen künstlichen Zahnersatz (beispielsweise eine künstliche Zahnkrone oder Brücke) auf, der mit der Schnittstelle integral verbunden ist, wobei sich die Öffnung durch den Fortsatz hindurch in den künstlichen Zahnersatz hinein erstreckt. Das obere Ende des Fortsatzes ist vorzugsweise integral mit dem künstlichen Zahnersatz verbunden. Das gegenüberliegende, freie, untere Ende des Fortsatzes steht nach unten hin von dem künstlichen Zahnersatz ab.

Die oben genannte Aufgabe wird gemäß einem zweiten Aspekt der Erfindung durch ein Zahnimplantat gemäß Anspruch 10 gelöst, das ein auf einer Außenseite des Zahnimplantats angeordnetes Außengewinde zur Befestigung des Zahnimplantats an einem Kieferknochen, eine sich entlang einer Längsachse des Zahnimplantats erstreckende Öffnung, in der ein Innengewinde zur Befestigung einer Suprakonstruktion an dem Zahnimplantat angeordnet ist, und eine Schnittstelle zur Befestigung der Suprakonstruktion an dem Zahnimplantat aufweist. Die Schnittstelle ist im Bereich eines stirnseitigen Endes des Zahnimplantats angeordnet und weist eine in der Öffnung angeordnete, zylindrische oder konische Innenmantelfläche auf, die die Längsachse zumindest teilweise umgibt und durch ein Verdrehsicherungselement unterbrochen ist, das als Gegenstück zu einer an der Suprakonstruktion angeordneten Aussparung dient und dazu eingerichtet ist, eine Verdrehung der Suprakonstruktion um die Längsachse relativ zu dem Zahnimplantat zu verhindern, wobei das Verdrehsicherungselement radial nach innen von der Innenmantelfläche absteht. Das Verdrehsicherungselemen weist zwei parallel zueinander verlaufende, planare, einander gegenüberliegende Mitnehmerflächen und eine konvexe Anlagefläche auf, an welche die planaren Mitnehmerflächen jeweils angrenzen. Die im Bereich des stirnseitigen, oberen, freien Endes des Zahnimplantats angeordnete Schnittstelle ist als Gegenstück zu der oben erwähnten Schnittstelle, die im Bereich des unteren, freien Endes der Suprakonstruktion angeordnet ist, ausgebildet. Die oben bezüglich der Schnittstelle der Suprakonstruktion erwähnten Vorteile ergeben sich somit auch bezüglich der an dem Zahnimplantat angeordneten Schnittstelle in äquivalenter Weise.

Auch das zu der Schnittstelle am Zahnimplantat gehörige Verdrehsicherungselement ist äquivalent bzw. als Gegenstück zu der an der Schnittstelle der Suprakonstruktion angeordneten Aussparung ausgebildet.

Erfindungsgemäß weist das Verdrehsicherungselement zwei parallel zueinander verlaufende, planare Mitnehmerflächen auf.

Die beiden planaren Mitnehmerflächen verlaufen vorzugsweise parallel zu einer Radialrichtung des Zahnimplantats, die orthogonal zu der Längsachse des Zahnimplantats ausgerichtet ist.

Als Gegenstück zu der konkaven Anlagefläche der an der Suprakonstruktion angeordneten Aussparung weist das Verdrehsicherungselement eine entsprechend konvex geformte Anlagefläche auf. Diese konvexe Anlagefläche verläuft vorzugsweise parallel zu der Radialrichtung des Zahnimplantats (orthogonal zu der Längsachse).

Die planaren Mitnehmerflächen des Verdrehsicherungselementes grenzen jeweils an die konvexe Anlagefläche an und liegen einander gegenüber.

Gemäß einer weiteren Ausgestaltung des erfindungsgemäßen Zahnimplantats grenzt die zylindrische oder konische Innenmantelfläche unmittelbar an das stirnseitige, obere Ende des Zahnimplantats an. Ein unmittelbares Angrenzen der zylindrischen oder konischen Mantelfläche an das stirnseitige, obere Ende des Zahnimplantats ist jedoch nicht zwangsläufig notwendig. Grundsätzlich ist es jedoch bevorzugt, dass die zylindrische oder konische Innenmantelfläche oberhalb des in dem Zahnimplantat befindlichen Innengewindes angeordnet ist. Das Innengewinde hat also einen größeren Abstand von dem stirnseitigen, oberen Ende des Zahnimplantats als die zylindrische oder konische Innenmantelfläche.

Ähnlich wie an der entsprechenden Mantelfläche der Suprakonstruktion ist auch die an dem Zahnimplantat angeordnete zylindrische oder konische Innenmantelfläche, abgesehen von dem Verdrehsicherungselement, vorzugsweise symmetrisch zu der Längsachse.

Das Verdrehsicherungselement ist, ähnlich wie die an der Suprakonstruktion angeordnete Aussparung, vorzugsweise spiegelsymmetrisch zu einer Längsschnittebene, in der die Längsachse liegt, und die das Verdrehsicherungselement in zwei gleich große Hälften teilt. Das Verdrehsicherungselement ist also vorzugsweise spiegelsymmetrisch zu dieser Längsschnittebene.

Gemäß einer weiteren Ausgestaltung des erfindungsgemäßen Zahnimplantats weist die Schnittstelle eine im Bereich des stirnseitigen Endes angeordnete Außenmantelfläche auf, die quer zu der Längsachse ausgerichtet ist, die Öffnung umgibt und in einer Draufsicht entlang der Längsachse betrachtet, kreisringförmig ist. Diese Außenmantelfläche ist vorzugsweise konisch ausgestaltet. Sie dient vorzugsweise nicht als Anlagefläche, mit der die Suprakonstruktion an dem Zahnimplantat anliegt, sondern bildet eine freie Außenfläche des Zahnimplantats, welche die Suprakonstruktion bzw. den Fortsatz der Suprakonstruktion umgibt, ohne diesen zu berühren. Vorzugsweise grenzt diese Außenmantelfläche an ihrem oberen Ende unmittelbar an ein oberes Ende der zylindrischen oder konischen Innenmantelfläche, die innerhalb der im Zahnimplantat befindlichen Öffnung angeordnet ist, an.

Wie eingangs erwähnt, betrifft die vorliegende Erfindung neben der erfindungsgemäßen Suprakonstruktion und dem erfindungsgemäßen Zahnimplantat auch eine Zahnprothese, die die erfindungsgemäße Suprakonstruktion und/oder das erfindungsgemäße Zahnimplantat aufweist. Vorzugsweise weist diese Zahnprothese des Weiteren ein Befestigungselement zur Befestigung der Suprakonstruktion an dem Zahnimplantat auf. Bei diesem Befestigungselement handelt es sich besonders bevorzugt um eine Schraube, die in das Innengewinde des Zahnimplantats eingreift.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht eines ersten Ausführungsbeispiels des erfindungsgemäßen Zahnimplantats;
- Fig. 2: eine Längsschnittansicht des in Fig. 1 gezeigten ersten Ausführungsbeispiels des erfindungsgemäßen Zahnimplantats;
- Fig. 3: eine Draufsicht von oben auf das in Fig. 1 gezeigte Ausführungsbeispiel des erfindungsgemäßen Zahnimplantats;
- Fig. 4: eine perspektivische Ansicht eines ersten Ausführungsbeispiels der erfindungsgemäßen Suprakonstruktion;
- Fig. 5: eine Draufsicht von unten auf das in Fig. 4 gezeigte erste Ausführungsbeispiel der erfindungsgemäßen Suprakonstruktion;
- Fig. 6: eine Längsschnittansicht einer Zahnprothese, mit dem erfindungsgemäßen Zahnimplantat und der erfindungsgemäßen Suprakonstruktion gemäß des ersten Ausführungsbeispiels;
- Fig. 7: eine perspektivische Ansicht eines zweiten Ausführungsbeispiels des erfindungsgemäßen Zahnimplantats;
- Fig. 8: eine Längsschnittansicht des in Fig. 7 gezeigten zweiten Ausführungsbeispiels des erfindungsgemäßen Zahnimplantats;
- Fig. 9: eine Draufsicht von oben auf das in Fig. 7 gezeigte zweite Ausführungsbeispiel des erfindungsgemäßen Zahnimplantats;
- Fig. 10: eine perspektivische Ansicht eines zweiten Ausführungsbeispiels der erfindungsgemäßen Suprakonstruktion;
- Fig. 11: eine Draufsicht von unten auf das in Fig. 10 gezeigte zweite Ausführungsbeispiel der erfindungsgemäßen Suprakonstruktion; und
- Fig. 12: eine Längsschnittansicht einer Zahnprothese mit dem erfindungsgemäßen Zahnimplantat und der erfindungsgemäßen Suprakonstruktion gemäß des zweiten Ausführungsbeispiels.

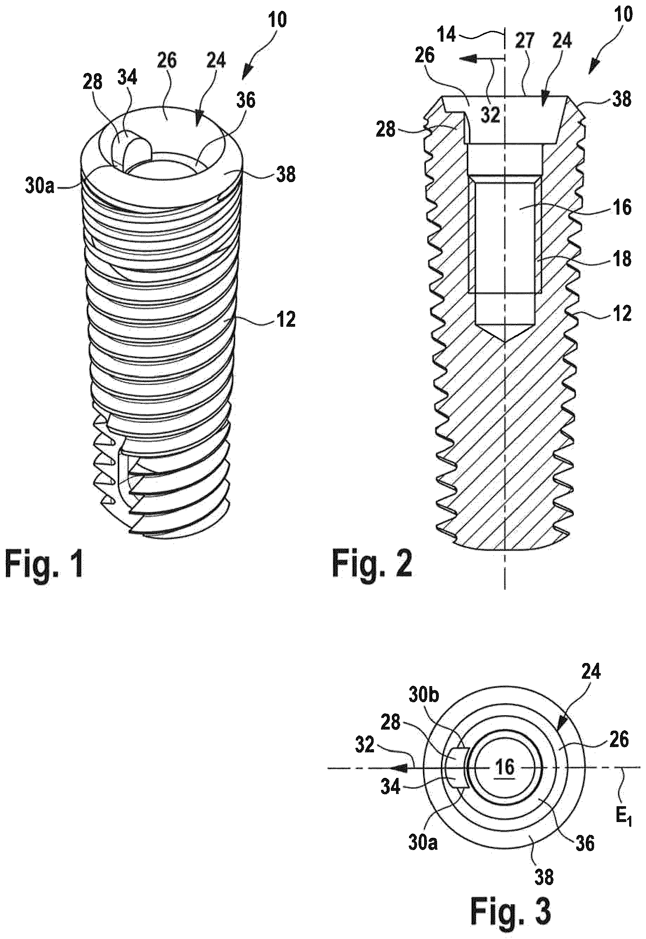

Fig. 1-3 zeigen ein erstes Ausführungsbeispiel des erfindungsgemäßen Zahnimplantats in verschiedenen Ansichten. Das Zahnimplantat ist darin in seiner Gesamtheit mit der Bezugsziffer 10 bezeichnet.

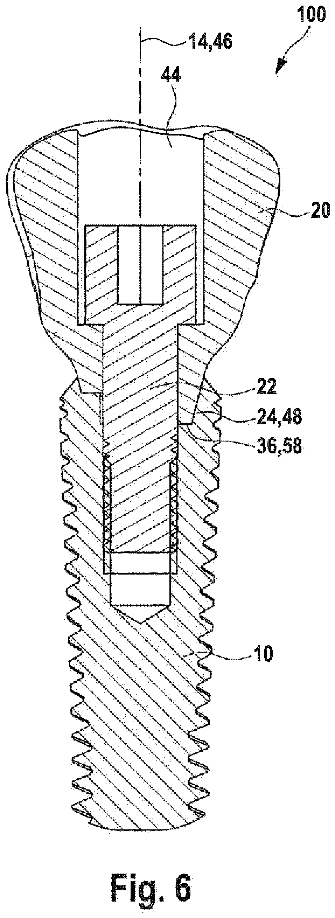

Das Zahnimplantat 10 ist typischerweise aus Titan oder Zirkonoxid gefertigt. Es weist auf seiner Außenseite ein Außengewinde 12 auf, mithilfe dessen das Zahnimplantat 10 in einen Kieferknochen eines Patienten eingeschraubt werden kann. Das Zahnimplantat 10 erstreckt sich im Wesentlichen entlang einer Längsachse 14, welche auch als Mittelachse gezeichnet werden kann. In seinem Inneren weist das Zahnimplantat 10 eine Öffnung 16 auf, welche sich entlang der Längsachse 14 erstreckt. Vorzugsweise ist zumindest ein Teil dieser Öffnung 16 als Bohrung, besonders bevorzugt als Sacklochbohrung ausgestaltet. In der Öffnung 16 ist ein Innengewinde 18 angeordnet. Diese Innengewinde 18 dient der Befestigung einer Suprakonstruktion 20 (künstliche Zahnkrone) an dem Zahnimplantat 10. Zur Befestigung der Suprakonstruktion 20 an dem Zahnimplantat 10 wird vorzugsweise eine Schraube 22 verwendet, welche in das Innengewinde 18 eingreift (siehe Fig. 6).

An dem stirnseitigen, oberen Ende weist das Zahnimplantat 10 eine Schnittstelle 24 auf, welche in Fig. 3 in einer Draufsicht von oben dargestellt ist. Diese Schnittstelle 24 dient der Befestigung der Suprakonstruktion 20 an dem Zahnimplantat 10. Die Schnittstelle 24 bildet sozusagen den Kontaktbereich, mit dem das Zahnimplantat 10 die Suprakonstruktion 20 in montiertem Zustand der Zahnprothese 100 kontaktiert.

Die Besonderheit der Schnittstelle 24 ist darin zu sehen, dass diese aufgrund ihrer Form und Konstruktion eine direkte Anbringung der Suprakonstruktion an dem Zahnimplantat 10 ermöglicht (ohne die Verwendung eines dazwischen angeordneten Abutments).

Die Schnittstelle 24 weist eine Innenmantelfläche 26 auf, die in der Öffnung 16 angeordnet ist. Diese Innenmantelfläche 26 umgibt die Längsachse 14 zumindest teilweise und grenzt vorzugsweise unmittelbar an ein oberes, stirnseitiges Ende 27 des Zahnimplantats 10 an. In dem in Fig. 1-3 gezeigten, ersten Ausführungsbeispiel ist die Innenmantelfläche 26 als konische Mantelfläche ausgestaltet, die rotationssymmetrisch zu der Längsachse 14 ist.

Die Schnittstelle 24 weist des Weiteren ein Verdrehsicherungselement 28 auf. Dieses Verdrehsicherungselement 28 verhindert in montiertem Zustand der Zahnprothese 100 ein Verdrehen der Suprakonstruktion 20 gegenüber dem Zahnimplantat 10. Das Verdrehsicherungselement 28 steht radial nach innen von der Innenmantelfläche 26 ab.

Das Verdrehsicherungselement 28 ist in dem vorliegend gezeigten Ausführungsbeispiel einstückig bzw. integral mit dem Zahnimplantat 10 verbunden. Grundsätzlich kann Verdrehsicherungselement 28 jedoch auch als separates Bauteil ausgestaltet sein, das in dem Zahnimplantat 10 befestigt wird.

Das Verdrehsicherungselement 28 weist zwei einander gegenüberliegende Mitnehmerflächen 30a, 30b auf. Diese beiden Mitnehmerflächen 30a, 30b sind auf gegenüberliegenden Seiten des Verdrehsicherungselementes 28 angeordnet. Die Mitnehmerflächen 30a, 30b sind jeweils als planare Flächen ausgestaltet. Vorzugsweise verlaufen beide planaren Mitnehmerflächen 30a, 30b parallel zu einer Radialrichtung 32, die orthogonal zu der Längsachse 14 ausgerichtet ist. Die genannte Radialrichtung 32 ist in Fig. 2 und 3 jeweils als Pfeil eingezeichnet. Eine durch diese Radialrichtung 32 und die Längsachse 14 aufgespannte, imaginäre Längsschnittebene E₁ teilt das Verdrehsicherungselement 28 in zwei gleich große Hälften. Das Verdrehsicherungselement 28 ist vorzugsweise spiegelsymmetrisch zu dieser Längsschnittebene E₁ ausgestaltet.

Die Mitnehmerflächen 30a,. 30b dienen als Anlageflächen für entsprechende Gegenflächen, die an der Suprakonstruktion angeordnet sind und weiter unten im Detail erläutert werden. Die Mitnehmerflächen 30a, 30b dienen im Wesentlichen der Aufnahme eines um die Längsachse 14 zwischen der Suprakonstruktion 20 und dem Zahnimplantat 10 wirkenden Drehmoments. Sie verhindern eine Verdrehung der Suprakonstruktion 20 gegenüber dem Zahnimplantat 10 um die Längsachse 14. Aufgrund der beschriebenen Anordnung der Mitnehmerflächen 30a, 30b nehmen diese im Wesentlichen in Umfangsrichtung wirkende Kräfte auf.

Des Weiteren weist das Verdrehsicherungselement 28 eine konvexe Anlagefläche 34 auf. Diese konvexe Anlagefläche 34 bildet eine Oberseite des Verdrehsicherungselementes 28, die dem stirnseitigen, oberen Ende 27 des Zahnimplantats 10 zugewandt ist. Die konvexe Anlagefläche 34 verläuft im Wesentlichen parallel zu der Radialrichtung 32. Sie ist ebenfalls symmetrisch zu der imaginären Längsschnittebene E₁.

Die planaren Mitnehmerflächen 30a, 30b grenzen an gegenüberliegenden Seiten an die konvexe Anlagefläche 34 an. Die erste Mitnehmerfläche 30a grenzt an ein erstes Ende der konvexen Anlagefläche 34 an und die zweite Mitnehmerfläche 30b grenzt an ein gegenüberliegendes, zweites Ende der konvexen Anlagefläche 34 an.

Die konvexe Anlagefläche 34 dient als Anlagefläche für eine entsprechend konkav geformte Gegenfläche, die an der Suprakonstruktion 20 angeordnet ist und weiter unten im Detail beschrieben wird. Durch die konvexe Anlagefläche 34 werden im Wesentlichen Kräfte parallel zur Längsachse 14 aufgenommen. Aufgrund ihrer konvexen Form können über die konvexe Anlagefläche 34 jedoch auch Kräfte quer dazu übertragen werden.

Im Inneren der Öffnung 16 weist das Zahnimplantat 10 ferner eine kreisringförmige Auflagefläche 36 auf. Diese kreisringförmige Auflagefläche 36 ist in dem vorliegend gezeigten Ausführungsbeispiel örtlich zwischen der konischen Innenmantelfläche 26 und dem Innengewinde 18 angeordnet. Sie grenzt unmittelbar an die konische Innenmantelfläche 26 an und ist quer, vorzugsweise orthogonal zu der Längsachse 14 ausgerichtet.

Die kreisringförmige Auflagefläche 36 kann als axiale Anlagefläche für die Suprakonstruktion 20 dienen und demnach Kräfte parallel zu der Längsachse 14 aufnehmen. Wie Fig. 6 entnehmbar ist, liegt sich in montiertem Zustand der Zahnprothese 100 an einer entsprechenden Gegenfläche der Suprakonstruktion, die weiter unter näher im Detail erläutert wird, an.

Es sei jedoch darauf hingewiesen, dass die axiale Anlage der Suprakonstruktion 20 an dem Zahnimplantat 10 nicht zwangsläufig an der kreisringförmigen Auflagefläche 36 erfolgen muss. Insbesondere in dem Fall der konvexen Ausgestaltung der Innenmantelfläche 26 kann auch die Innenmantelfläche 26 sowohl als radiale als auch axiale Anlagefläche für die Suprakonstruktion 20 dienen.

Das Zahnimplantat 10 weist des Weiteren eine im Bereich des stirnseitigen Endes 27 angeordnete Außenmantelfläche 38 auf. Diese Außenmantelfläche 38 ist quer zu der Längsachse 14 ausgerichtet. Sie umgibt die Öffnung 16 und ist in dem vorliegenden Ausführungsbeispiel konisch ausgestaltet. In einer Draufsicht entlang der Längsachse 14 betrachtet ist die konische Außenmantelfläche 34 kreisförmig. Wie aus Fig. 6 ersichtlich ist, bildet diese Außenmantelfläche 38 eine Außenseite des Zahnimplantats 10, die vorzugsweise nicht an der Suprakonstruktion 20 anliegt. In dem vorliegend gezeigten Ausführungsbeispiel grenzt die Außenmantelfläche 38 an dem stirnseitigen Ende 27 des Zahnimplantats 10 unmittelbar an die konische Innenmantelfläche 26 an.

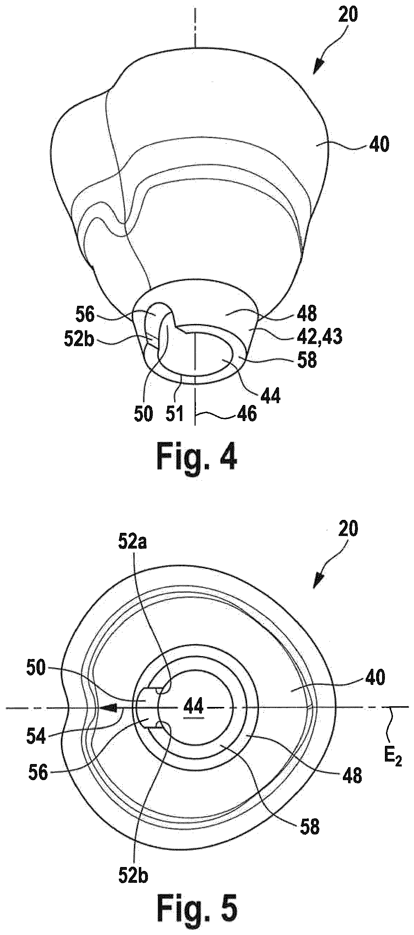

Fig. 4 und 5 zeigen ein erstes Ausführungsbeispiel der Suprakonstruktion 20, die als Gegenstück zu dem in Fig. 1-3 gezeigten Zahnimplantat 10 dient. Die Suprakonstruktion 20 weist einen künstlichen Zahnersatz 40 auf, der hier als künstliche Zahnkrone dargestellt ist. An der Unterseite dieser künstlichen Zahnkrone 40 ist eine Schnittstelle 42 angeordnet, die der Verbindung mit dem Zahnimplantat 10 dient. Die Schnittstelle 42 ist als Fortsatz 43 ausgestaltet, der von der Unterseite der künstlichen Zahnkrone 40 nach unten hin absteht. Dieser die Schnittstelle 42 bildende Fortsatz 43 ist als entsprechendes Gegenstück zu der am Zahnimplantat 10 angeordneten Schnittstelle 24 ausgestaltet.

Im Inneren weist die Suprakonstruktion 20 eine Öffnung 44 auf, die vorzugsweise als Durchgangsbohrung ausgestaltet ist. Diese Öffnung 44 wird am oberen, stirnseitigen Ende der künstlichen Zahnkrone 40 verschlossen, nachdem die Zahnprothese 100 an dem Patienten montiert ist. Die Öffnung 44 erstreckt sich im Wesentlichen entlang einer Längsachse 46 der Suprakonstruktion 20. Diese Längsachse 46 der Suprakonstruktion 20 fällt in montiertem Zustand der Zahnprothese 100 mit der Längsachse 14 des Zahnimplantats 10 zusammen (siehe Fig. 6).

Die an der Suprakonstruktion 20 vorgesehene Schnittstelle 42 weist eine Mantelfläche 48 auf, die eine Außenseite der Schnittstelle 42 bildet und die Öffnung 44 in Umfangsrichtung umgibt. Die Mantelfläche 48 ist in dem in Fig. 4 und 5 gezeigten, ersten Ausführungsbeispiel als Pendant zu der an dem Zahnimplantat 10 angeordneten Innenmantelfläche 26 konisch ausgestaltet.

Ferner weist die Schnittstelle 42 eine Aussparung 50 auf, die seitlich in den die Schnittstelle 42 bildenden Fortsatz 43 eingebracht ist. Die Aussparung 50 dient als Gegenstück zu dem Verdrehsicherungselement 28. In montiertem Zustand der Zahnprothese 100 greift das Verdrehsicherungselement 28 in diese Aussparung 50 ein.

Die Aussparung 50 ist nach unten hin offen. Sie hat demnach keine geschlossene Kontur, sondern ist einseitig zum stirnseitigen, unteren Ende 51 der Schnittstelle 42 offen. Der Querschnitt der Aussparung 50 ist vorzugsweise U-förmig (bzw. hat die Form eines auf dem Kopf stehenden U). Sie lässt sich demnach auch als tunnelartige Aussparung ohne Bodenfläche beschreiben.

Die Aussparung 50 durchquert die Seitenwand des die Schnittstelle 42 bildenden Fortsatzes 43. Sie unterbricht somit die Mantelfläche 48 und mündet in die im Inneren der Suprakonstruktion 20 verlaufende Öffnung 44.

Die Aussparung 50 weist als Gegenstücke zu den beiden Mitnehmerflächen 30a, 30b zwei einander gegenüberliegende Mitnehmerflächen 52a, 52b auf. Die Mitnehmerflächen 52a, 52b verlaufen. ähnlich wie die Mitnehmerflächen 30a, 30b parallel zueinander und vorzugsweise parallel zu einer Radialrichtung 54, die orthogonal zu der Längsachse 46 der Suprakonstruktion 20 ausgerichtet ist. In montiertem Zustand der Zahnprothese 100 liegt die Mitnehmerfläche 52a an der Mitnehmerfläche 30a an. Ebenso liegt dann die Mitnehmerfläche 52b an der Mitnehmerfläche 30b an.

Als Gegenstück zu der am Verdrehsicherungselement 28 angeordneten, konvexen Anlagefläche 34 weist die Aussparung 50 eine konkave Anlagefläche 56 auf. Diese konkave Anlagefläche 56 ist vorzugsweise als Zylinderfläche ausgestaltet, deren Querschnitt halbkreisförmig ist.

Die konkave Anlagefläche 56 grenzt auf einer ersten Seite an die planare Mitnehmerfläche 52b und auf einer zweiten, gegenüberliegenden Seite an die planare Mitnehmerfläche 52a an. Ähnlich der Form des Mitnehmerelements 28 ergibt dies eine Form der Aussparung 50, die spiegelsymmetrisch zu einer Längsschnittebene E₂ ist, die durch die Radialrichtung 54 und die Längsachse 46 aufgespannt wird

Die Schnittstelle 42 ist, abgesehen von der Aussparung 50 (dreh-)symmetrisch zu der Längsachse 46. Die Öffnung 44 verläuft demnach vorzugsweise zentrisch durch den die Schnittstelle 42 bildenden Fortsatz 43 hindurch. Somit ist auch die gesamte Schnittstelle 42 vorzugsweise spiegelsymmetrisch zu der Längsschnittebene E₂ (siehe Fig. 5).

An ihrem unteren, stirnseitigen Ende 51 weist die Schnittstelle 42 eine kreisringförmige Auflagefläche 58 auf. Diese kreisringförmige Auflagefläche 58 dient als Gegenstück zu der am Zahnimplantat 10 angeordneten kreisringförmigen Auflagefläche 36. Die kreisringförmige Auflagefläche 58 bildet keinen geschlossenen Kreisring, da sie durch die Aussparung 50 unterbrochen ist. Sie bildet also nur ein Kreisringsegment.

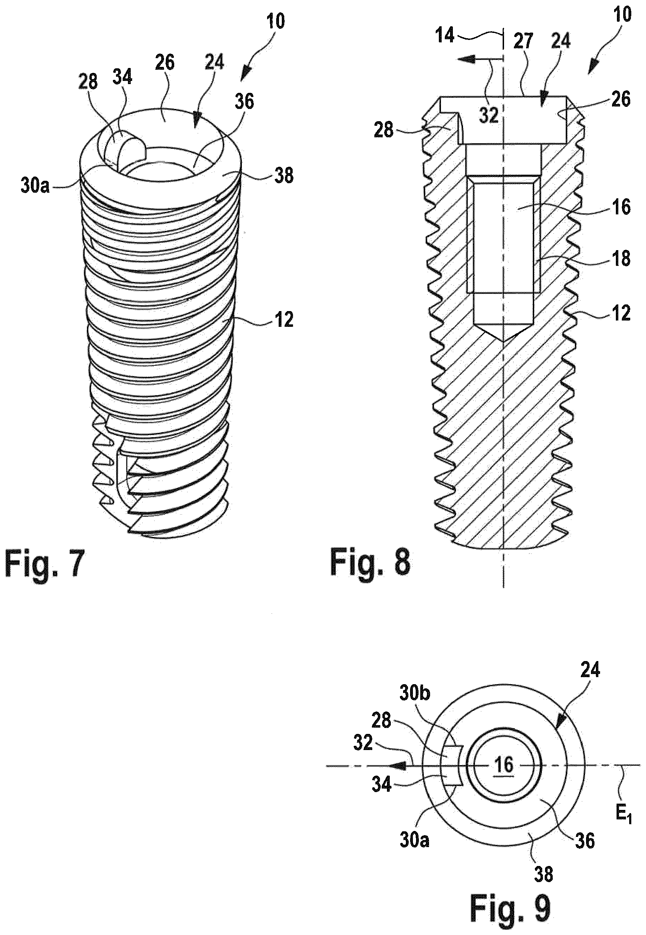

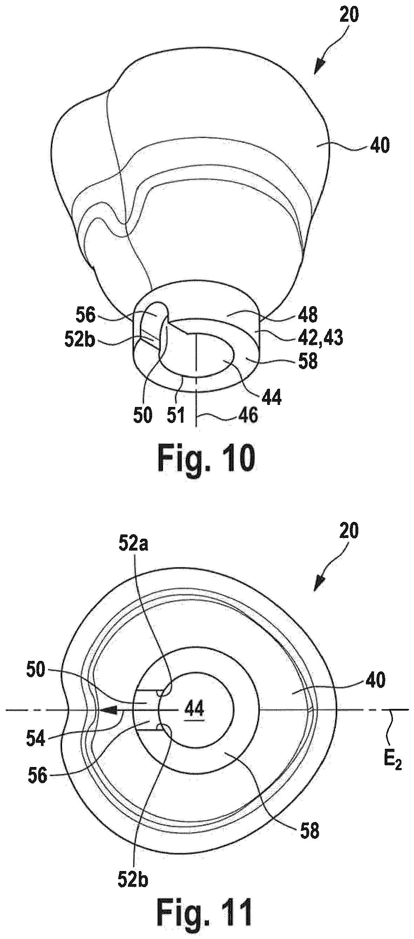

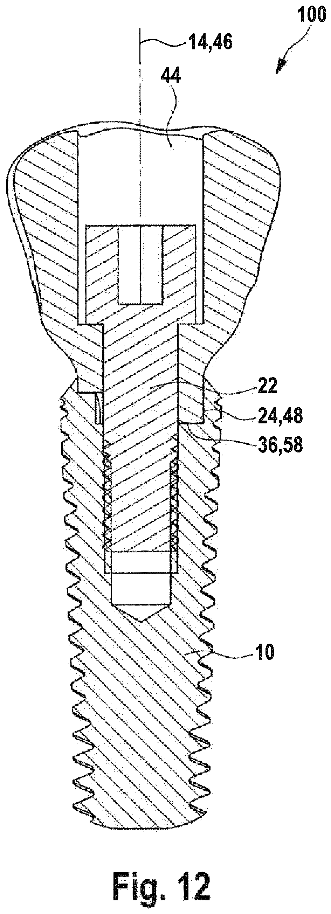

Fig. 7-12 zeigen ein zweites Ausführungsbeispiel des erfindungsgemäßen Zahnimplantats 10 (Fig. 7-9), der erfindungsgemäßen Suprakonstruktion 20 (Fig. 10 und 11) sowie der erfindungsgemäßen Zahnprothese 100 (Fig. 12). Gleiche bzw. entsprechende Bauteile sind darin mit denselben Bezugsziffern gekennzeichnet wie zuvor. Der grundsätzliche Aufbau des Zahnimplantats 10 und der Suprakonstruktion 20 gemäß dem zweiten Ausführungsbeispiel entspricht im Wesentlichen dem des in Fig. 1-6 gezeigten ersten Ausführungsbeispiels. Der wesentliche Unterschied des zweiten Ausführungsbeispiel besteht darin, dass die am Zahnimplantat 10 angeordnete Innenmantelfläche 26 und die an der Suprakonstruktion 20 angeordnete Außenmantelfläche 48 nicht konkav, sondern zylindrisch ausgestaltet sind. Dementsprechend sind die kreisringförmigen Auflageflächen 36, 58, an denen die Suprakonstruktion 20 axial an dem Zahnimplantat 10 anliegt, vergleichsweise größer ausgestaltet. Letzteres muss jedoch nicht zwangsläufig der Fall sein. Grundsätzlich genügt auch eine etwas kleinere Ausgestaltung der kreisringförmigen Auflageflächen 36, 58 für den Fall von zylindrischen Mantelflächen 24, 48.

Abschließend sei darauf hingewiesen, dass die beiden vorliegend gezeigten Ausführungsbeispiele des Zahnimplantats 10, der Suprakonstruktion 20 und der Zahnprothese 100 lediglich zwei von vielen möglichen Ausführungsbeispielen darstellen. Es versteht sich, dass diverse Merkmale dieser beiden Ausführungsbeispiele ohne weiteres abwandelbar sind, ohne den Rahmen der vorliegenden Erfindung, wie sie in den beigefügten Ansprüchen definiert ist, zu verlassen. Ebenso versteht es sich, dass die beiden Ausführungsbeispiele auch miteinander kombinierbar sind, ohne den Rahmen der vorliegenden Erfindung, wie sie in den beigefügten Ansprüchen definiert ist, zu verlassen. Beispielsweise könnte ein Teil der Mantelflächen 24, 48 jeweils zylindrisch und ein anderer Teil jeweils konisch ausgestaltet sein.

## Patentansprüche

1. Suprakonstruktion (20), aufweisend:
- eine sich entlang einer Längsachse (46) der Suprakonstruktion (20) erstreckende Öffnung (44); und
- eine Schnittstelle (42) zur Befestigung der Suprakonstruktion (20) an einem Zahnimplantat (10);
wobei die Schnittstelle (42) als Fortsatz (43) ausgestaltet ist, der an einer Unterseite der Suprakonstruktion (20) angeordnet ist, die Öffnung (44) umgibt und eine zylindrische oder konische Mantelfläche (48) hat, die eine Außenseite des Fortsatzes (43) bildet,
wobei die Mantelfläche (48) durch eine Aussparung (50) unterbrochen ist, die in die Öffnung (44) mündet und als Gegenstück zu einem an dem Zahnimplantat (10) angeordneten Verdrehsicherungselement (28) dient, und
wobei die Aussparung (50) zwei parallel zueinander verlaufende, planare, einander gegenüberliegende Mitnehmerflächen (52a, 52b) aufweist,
**dadurch gekennzeichnet, dass** die Aussparung (50) eine konkave Anlagefläche (56) aufweist, an welche die planaren Mitnehmerflächen (52a, 52b) jeweils angrenzen.

2. Zahnimplantat nach Anspruch 1, wobei die Aussparung (50) im Bereich eines unteren, freien Endes (51) des Fortsatzes (43) angeordnet und nach unten zu dem freien Ende hin offen.

3. Suprakonstruktion nach Anspruch 1 oder 2, wobei die Aussparung (50) eine tunnelartige Aussparung ist.

4. Suprakonstruktion nach Anspruch 3, wobei die beiden planaren Mitnehmerflächen (52a, 52b) jeweils parallel zu einer Radialrichtung (54) verlaufen, die orthogonal zu der Längsachse (46) ausgerichtet ist.

5. Suprakonstruktion nach einem der Ansprüche 1 bis 4, wobei die konkave Anlagefläche (56) parallel zu einer Radialrichtung (54) verläuft, die orthogonal zu der Längsachse (46) ausgerichtet ist.

6. Suprakonstruktion nach einem der Ansprüche 1 bis 5, wobei die Öffnung (44) zentrisch durch den Fortsatz (43) hindurch verläuft.

7. Suprakonstruktion nach einem der Ansprüche 1 bis 6, wobei der Fortsatz (43) spiegelsymmetrisch zu einer Längsschnittebene (E₂) ist, in der die Längsachse (46) liegt und die die Aussparung (50) in zwei gleich große Hälften teilt.

8. Suprakonstruktion nach einem der Ansprüche 1 bis 7, wobei der Fortsatz (43) an seinem unteren, freien Ende (51) eine kreisringförmige Auflagefläche (58) aufweist, die durch die Aussparung (50) unterbrochen ist und quer, vorzugsweise orthogonal, zu der Längsachse (46) ausgerichtet ist.

9. Suprakonstruktion nach einem der Ansprüche 1 bis 8, wobei die Suprakonstruktion (20) einen künstlichen Zahnersatz (40) aufweist, der mit der Schnittstelle (42) integral verbunden ist, wobei sich die Öffnung (46) durch den Fortsatz (43) hindurch in den künstlichen Zahnersatz (40) hinein erstreckt.

10. Zahnimplantat (10), aufweisend:
- ein auf einer Außenseite des Zahnimplantats (10) angeordnetes Außengewinde (12) zur Befestigung des Zahnimplantats (10) an einem Kieferknochen;
- eine sich entlang einer Längsachse (14) des Zahnimplantats (10) erstreckende Öffnung (16), in der ein Innengewinde (18) zur Befestigung einer Suprakonstruktion (20) an dem Zahnimplantat (10) angeordnet ist; und
- eine Schnittstelle (24) zur Befestigung der Suprakonstruktion (20) an dem Zahnimplantat (10), welche im Bereich eines stirnseitigen Endes (27) des Zahnimplantats (10) angeordnet ist;
wobei die Schnittstelle (24) eine in der Öffnung (16) angeordnete, zylindrische oder konische Innenmantelfläche (26) aufweist, die die Längsachse (14) zumindest teilweise umgibt und durch ein Verdrehsicherungselement (28) unterbrochen ist, das als Gegenstück zu einer an der Suprakonstruktion (20) angeordneten Aussparung (50) dient und dazu eingerichtet ist, eine Verdrehung der Suprakonstruktion (20) um die Längsachse (14) relativ zu dem Zahnimplantat (10) zu verhindern, und
wobei das Verdrehsicherungselement (28) radial nach innen von der Innenmantelfläche (26) absteht,
**dadurch gekennzeichnet, dass** das Verdrehsicherungselement (28) zwei parallel zueinander verlaufende, planare, einander gegenüberliegende Mitnehmerflächen (30a, 30b) aufweist, und dass das Verdrehsicherungselement (28) eine konvexe Anlagefläche (34) aufweist, an welche die planaren Mitnehmerflächen (30a, 30b) jeweils angrenzen.

11. Zahnprothese (100), aufweisend:
- eine Suprakonstruktion (20) gemäß einem der Ansprüche 1-9;
- ein Zahnimplantat (10); und
- ein Befestigungselement (22) zur Befestigung der Suprakonstruktion (20) an dem Zahnimplantat (10).

12. Zahnprothese (100), aufweisend:
- eine Suprakonstruktion (20);
- ein Zahnimplantat (10) gemäß Anspruch 10; und
- ein Befestigungselement (22) zur Befestigung der Suprakonstruktion (20) an dem Zahnimplantat (10).

## Claims

1. A superstructure (20), comprising:
- an opening (44) extending along a longitudinal axis (46) of the superstructure (20); and
- an interface (42) for attaching the superstructure (20) to a dental implant (10);
wherein the interface (42) is configured as an extension (43) disposed on a lower side of the superstructure (20), surrounding the opening (44) and having a cylindrical or conical lateral surface (48) that forms an outer surface of the extension (43), and
wherein the lateral surface (48) is interrupted by a recess (50) that opens into the opening (44) and serves as a counterpart to an anti-rotation element (28) arranged on the dental implant (10), and
wherein the recess (50) comprises two planar drive surfaces (52a, 52b) extending parallel to each other and arranged opposite to one another,
**characterized in that** the recess (50) comprises a concave abutment surface (56) to which the two planar drive surfaces (52a, 52b) adjoin, respectively.

2. The superstructure according to claim 1, wherein the recess (50) is arranged in a region of a lower free end (51) of the extension (43) and is on its lower side open toward the lower free end.

3. The superstructure according to claim 1 or 2, wherein the recess (50) is a tunnel-like recess.

4. The superstructure according to claim 3, wherein each of the two planar drive surfaces (52a, 52b) extends parallel to a radial direction (54) that is oriented orthogonally to the longitudinal axis (46).

5. The superstructure according to any of claims 1 to 4, wherein the concave abutment surface (56) extends parallel to a radial direction (54) that is oriented orthogonally to the longitudinal axis (46).

6. The superstructure according to any of claims 1 to 5, wherein the opening (44) extends centrally through the extension (43).

7. The superstructure according to any of claims 1 to 6, wherein the extension (43) is mirror-symmetrical to a longitudinal sectional plane (E₂) in which the longitudinal axis (46) lies and which divides the recess (50) into two equal halves.

8. The superstructure according to any of claims 1 to 7, wherein the extension (43) comprises at its lower free end (51) an annular bearing surface (58) that is interrupted by the recess (50) and oriented transversely, preferably orthogonally, to the longitudinal axis (46).

9. The superstructure according to any of claims 1 to 8, wherein the superstructure (20) comprises an artificial denture (40) that is integrally connected to the interface (42), wherein the opening (46) extends through the extension (43) into the artificial denture (40).

10. A dental implant (10), comprising:
- an external thread (12) arranged on an outer side of the dental implant (10) for fastening the dental implant (10) to a jaw bone;
- an opening (16) extending along a longitudinal axis (14) of the dental implant (10), in which an internal thread (18) is arranged for fastening a superstructure (20) to the dental implant (10); and
- an interface (24) for attaching the superstructure (20) to the dental implant (10), which is arranged in a region of a front end (27) of the dental implant (10);
wherein the interface (24) comprises a cylindrical or conical inner lateral surface (26) arranged in the opening (16), at least partially surrounding the longitudinal axis (14) and interrupted by an anti-rotation element (28) that serves as a counterpart to a recess (50) arranged on the superstructure (20) and that is configured to prevent rotation of the superstructure (20) about the longitudinal axis (14) relative to the dental implant (10), and
wherein the anti-rotation element (28) projects radially inwards from the inner lateral surface (26),
**characterized in that** the anti-rotation element (28) comprises two planar drive surfaces (30a, 30b) extending parallel to each other and arranged opposite to one another, and that the anti-rotation element (28) comprises a convex abutment surface (34) to which the two planar drive surfaces (30a, 30b) adjoin, respectively.

11. A dental prosthesis (100), comprising:
- a superstructure (20) according to any of claims 1-9;
- a dental implant (10); and
- a fastening element (22) for fastening the superstructure (20) to the dental implant (10).

12. A dental prosthesis (100), comprising:
- a superstructure (20);
- a dental implant (10) according to claim 10; and
- a fastening element (22) for fastening the superstructure (20) to the dental implant (10).

## Revendications

1. Superstructure (20), présentant :
- une ouverture (44) s'étendant le long d'un axe longitudinal (46) de la superstructure (20) ; et
- une interface (42) servant à la fixation de la superstructure (20) à un implant dentaire (10) ;
l'interface (42) étant configurée sous forme de prolongement (43) qui est disposé sur un côté inférieur de la superstructure (20), entoure l'ouverture (44) et a une surface d'enveloppe cylindrique ou conique (48) qui forme un côté extérieur du prolongement (43),
la surface d'enveloppe (48) étant interrompue par un évidement (50) qui débouche dans l'ouverture (44) et sert de pièce conjuguée par rapport à un élément de fixation anti-rotation (28) disposé sur l'implant dentaire (10), et
l'évidement (50) présentant deux surfaces d'entraînement (52a, 52b) s'étendant parallèlement l'une à l'autre, planes, en regard l'une de l'autre,
**caractérisée en ce que** l'évidement (50) présente une surface d'appui concave (56) à laquelle sont adjacentes respectivement les surfaces d'entraînement (52a, 52b) planes.

2. Implant dentaire selon la revendication 1, l'évidement (50) étant disposé dans la région d'une extrémité (51) inférieure libre du prolongement (43) et étant ouvert vers le bas en direction de l'extrémité libre.

3. Superstructure selon la revendication 1 ou 2, l'évidement (50) étant un évidement en forme de tunnel.

4. Superstructure selon la revendication 3, les deux surfaces d'entraînement (52a, 52b) planes s'étendant respectivement parallèlement à une direction radiale (54) qui est orientée orthogonalement par rapport à l'axe longitudinal (46).

5. Superstructure selon l'une des revendications 1 à 4, la surface d'appui concave (56) s'étendant parallèlement à une direction radiale (54) qui est orientée orthogonalement par rapport à l'axe longitudinal (46).

6. Superstructure selon l'une des revendications 1 à 5, l'ouverture (44) s'étendant de manière centrée à travers le prolongement (43).

7. Superstructure selon l'une des revendications 1 à 6, le prolongement (43) présentant une symétrie miroir par rapport à un plan de coupe longitudinal (E₂) dans lequel se situe l'axe longitudinal (46) et qui divise l'évidement (50) an deux moitiés égales.

8. Superstructure selon l'une des revendications 1 à 7, le prolongement (43) présentant, à son extrémité (51) inférieure libre, une surface de support (58) de forme annulaire circulaire qui est interrompue par l'évidement (50) et est orientée transversalement, de préférence orthogonalement, par rapport à l'axe longitudinal (46).

9. Superstructure selon l'une des revendications 1 à 8, la superstructure (20) présentant une prothèse dentaire artificielle (40) qui est reliée d'un seul tenant à l'interface (42), l'ouverture (46) s'étendant à travers le prolongement (43) dans la prothèse dentaire artificielle (40).

10. Implant dentaire (10), présentant :
- un filetage extérieur (12) disposé sur un côté extérieur de l'implant dentaire (10) et servant à la fixation de l'implant dentaire (10) à un os maxillaire ;
- une ouverture (16) s'étendant le long d'un axe longitudinal (14) de l'implant dentaire (10), dans laquelle est disposé un filetage intérieur (18) servant à la fixation d'une superstructure (20) à l'implant dentaire (10) ; et
- une interface (24) servant à la fixation de la superstructure (20) à l'implant dentaire (10), laquelle interface est disposée dans la région d'une extrémité (27) frontale de l'implant dentaire (10) ;
l'interface (24) présentant une surface d'enveloppe intérieure (26) cylindrique ou conique disposée dans l'ouverture (16), laquelle surface d'enveloppe intérieure entoure l'axe longitudinal (14) au moins partiellement et est interrompue par un élément de fixation anti-rotation (28) qui sert de pièce conjuguée par rapport à un évidement (50) disposé sur la superstructure (20) et est conçu pour empêcher une rotation de la superstructure (20) autour de l'axe longitudinal (14) par rapport à l'implant dentaire (10), et
l'élément de fixation anti-rotation (28) faisant saillie radialement vers l'intérieur à partir de la surface d'enveloppe intérieure (26),
**caractérisé en ce que** l'élément de fixation anti-rotation (28) présente deux surfaces d'entraînement (30a, 30b) s'étendant parallèlement l'une à l'autre, planes, en regard l'une de l'autre, et **en ce que** l'élément de fixation anti-rotation (28) présente une surface d'appui convexe (34) à laquelle sont adjacentes respectivement les surfaces d'entraînement (30a, 30b) planes.

11. Prothèse dentaire (100), présentant :
- une superstructure (20) selon l'une des revendications 1 à 9 ;
- un implant dentaire (10) ; et
- un élément de fixation (22) servant à la fixation de la superstructure (20) à l'implant dentaire (10).

12. Prothèse dentaire (100), présentant :
- une superstructure (20) ;
- un implant dentaire (10) selon la revendication 10 ; et
- un élément de fixation (22) servant à la fixation de la superstructure (20) à l'implant dentaire (10).
